# EUROPEAN PATENT APPLICATION

(11) **EP 4 549 713 A1**
(43) Date of publication of application: **07.05.2025**
(21) Application number: 24210097.2
(22) Date of filing: 31.10.2024
(51) Int. Cl.: F02B 37/10, F02B 39/10, F02B 61/02

(54) **LEANING VEHICLE**

(30) Priority: 31.10.2023 WO PCT/JP2023/039341
(71) Applicant: Yamaha Hatsudoki Kabushiki Kaisha, Iwata-shi, Shizuoka 438-8501 (JP)
(72) Inventor: MAKITA, Naoki, Iwata-shi, Shizuoka, 438-8501 (JP); TORIGOSHI, Masaki, Iwata-shi, Shizuoka, 438-8501 (JP); TAKAHASHI, Toshihiko, Iwata-shi, Shizuoka, 438-8501 (JP)
(74) Representative: Zimmermann, Tankred Klaus

(57) **Abstract**

A part (48) from an electrically assisted turbocharger unit side end portion (45) to a motor generator controller side end portion (46) in an electrically assisted turbocharger high voltage harness (40) of a leaning vehicle (1) is routed so that the length (Lh1) from the lower end to the upper end in a vehicle up-down direction is longer than the length (Lw1) from the left end to the right end in a vehicle left-right direction in a vehicle frontal view and the length (Lh1) from the lower end to the upper end in the vehicle up-down direction is longer than the length (L11) from the front end to the rear end in a vehicle front-rear direction in a vehicle side view. Alternatively, the length (L12) from the front end to the rear end in the vehicle front-rear direction is longer than the length (Lw2) from the left end to the right end in the vehicle left-right direction in a vehicle top view and the length (L12) from the front end to the rear end in the vehicle front-rear direction is longer than the length (Lh2) from the upper end to the lower end in the vehicle up-down direction in a vehicle side view.

## Description

### BACKGROUND OF THE INVENTION

The present teaching relates to a leaning vehicle on which an electrically assisted turbocharger is mounted.

Patent Literature 1 (International Publication No. 2020/217656) discloses a known motorcycle including an engine and a turbocharger. The turbocharger is driven by exhaust gas exhausted from the engine, and compresses intake air to supply a larger amount of air to the engine. It is therefore possible to obtain a large output and a high torque.

Patent Literature 2 (German Unexamined Patent Publication No. 102012004394) discloses a known automobile on which an engine and an electrically assisted turbocharger including an electric motor are mounted. The electrically assisted turbocharger drives the turbocharger by the electric motor in addition to the exhaust gas exhausted from the engine. This makes it possible not only to obtain a large output and a high torque, but also to improve the response characteristic of the engine in response to an operation of an acceleration operator.

### SUMMARY OF THE INVENTION

An electrically assisted turbocharger may be mounted on a leaning vehicle such as a motorcycle. An electric motor included in the electrically assisted turbocharger is driven by electric energy that a motor generator generates by rotational force of the crankshaft of the engine. The electrically assisted turbocharger and the motor generator are electric components driven at a high voltage. Electric components driven at a high voltage tend to be large in size. An electrically assisted turbocharger high voltage harness connecting the electrically assisted turbocharger, the motor generator, and at least one controller configured to control the electrically assisted turbocharger and the motor generator tends to be long because it is thick and cannot be easily bent. In this regard, when the high voltage harness is long, the resistance of the high voltage harness itself is large. A leaning vehicle is smaller in size than an automobile. The leaning vehicle is provided with, for example, members such as a coolant water pipe, a fuel pipe, and a low voltage harness. On this account, the leaning vehicle tends to be restricted in the layout of the electrically assisted turbocharger. To provide a leaning vehicle on which an electrically assisted turbocharger is mounted, it is required to facilitate the routing of an electrically assisted turbocharger high voltage harness, while taking into account other harnesses and pipes.

An object is to provide a leaning vehicle on which an electrically assisted turbocharger is mounted, which facilitates the routing of a thick electrically assisted turbocharger high voltage harness, while suppressing the electrically assisted turbocharger high voltage harness used at a high voltage from becoming long.
(1) A leaning vehicle of an embodiment of the present teaching has the following features.

The leaning vehicle includes: a vehicle body frame which leans in a vehicle rightward direction when turning right and leans in a vehicle leftward direction when turning left; an engine which includes a crankshaft; a motor generator which is configured to generate electric power by rotational force of the crankshaft; an electrically assisted turbocharger which includes a turbocharger and an electric motor, the turbocharger being configured to compress intake air supplied to the engine, by a compressor provided on the same rotational shaft as a turbine driven by exhaust gas exhausted from the engine, and the electric motor being configured to rotate the rotational shaft of the turbocharger by utilizing electric energy generated by the motor generator; at least one controller which is configured to control the motor generator and the electric motor rotating the rotational shaft of the electrically assisted turbocharger; and an electrically assisted turbocharger high voltage harness which connects the motor generator, the electric motor of the electrically assisted turbocharger, and the at least one controller so as to supply the electric energy from the motor generator to the electric motor of the electrically assisted turbocharger, the leaning vehicle further comprising: a motor generator unit which includes the motor generator and a motor generator controller configured to control the motor generator; and an electrically assisted turbocharger unit which includes the electrically assisted turbocharger and an electrically assisted turbocharger controller which is configured to control the electric motor of the electrically assisted turbocharger and is integrated with or separated from the electrically assisted turbocharger, the electrically assisted turbocharger high voltage harness which connects the motor generator unit and the electrically assisted turbocharger unit includes a part connecting the motor generator controller of the motor generator unit and the electrically assisted turbocharger controller of the electrically assisted turbocharger unit and a part connecting the electrically assisted turbocharger and the electrically assisted turbocharger controller of the electrically assisted turbocharger unit when the electrically assisted turbocharger and the electrically assisted turbocharger controller are separated from each other, and a part from an electrically assisted turbocharger unit side end portion to a motor generator controller side end portion in the electrically assisted turbocharger high voltage harness being either: (i) routed so that the length from the lower end to the upper end in a vehicle up-down direction is longer than the length from the left end to the right end in a vehicle left-right direction in a vehicle frontal view, and the length from the lower end to the upper end in the vehicle up-down direction is longer than the length from the front end to the rear end in a vehicle front-rear direction in a vehicle side view, or (ii) routed so that the length from the front end to the rear end in the vehicle front-rear direction is longer than the length from the left end to the right end in the vehicle left-right direction in a vehicle top view, and the length from the front end to the rear end in the vehicle front-rear direction is longer than the length from the upper end to the lower end in the vehicle up-down direction in a vehicle side view.

With this arrangement, the part from the electrically assisted turbocharger unit side end portion to the motor generator controller side end portion in the electrically assisted turbocharger high voltage harness of the leaning vehicle is routed so that the length from the lower end to the upper end in the vehicle up-down direction is longer than the length from the left end to the right end in the vehicle left-right direction in the vehicle frontal view, and the length from the lower end to the upper end in the vehicle up-down direction is longer than the length from the front end to the rear end in the vehicle front-rear direction in the vehicle side view. Alternatively, the part from the electrically assisted turbocharger unit side end portion to the motor generator controller side end portion in the electrically assisted turbocharger high voltage harness of the leaning vehicle is routed so that the length from the front end to the rear end in the vehicle front-rear direction is longer than the length from the left end to the right end in the vehicle left-right direction in the vehicle top view and the length from the front end to the rear end in the vehicle front-rear direction is longer than the length from the upper end to the lower end in the vehicle up-down direction in the vehicle side view. The leaning vehicle is arranged so that the length in the left-right direction is shorter than the length in the vehicle up-down direction and the length in the vehicle front-rear direction. In other words, the part from the motor generator controller side end portion to the electrically assisted turbocharger unit side end portion of the electrically assisted turbocharger high voltage harness is provided by utilizing the space extending in the vehicle up-down direction, which is longer than length of the leaning vehicle in the vehicle left-right direction in a vehicle frontal view. Alternatively, the part from the motor generator controller side end portion to the electrically assisted turbocharger unit side end portion of the electrically assisted turbocharger high voltage harness is provided by utilizing the space extending in the vehicle front-rear direction, which is longer than length of the leaning vehicle in the vehicle left-right direction in a vehicle side view. On this account, the total length of the electrically assisted turbocharger high voltage harness is suppressed and the resistance of the electrically assisted turbocharger high voltage harness itself is reduced. Furthermore, the degree of positional freedom of the motor generator unit and the electrically assisted turbocharger unit in the vehicle left-right direction is increased, so that it is possible to provide the part from the motor generator controller side end portion to the electrically assisted turbocharger unit side end portion in the electrically assisted turbocharger high voltage harness. This makes the routing easy.

Due to the above, it is possible to provide the leaning vehicle on which the electrically assisted turbocharger is mounted, which facilitates the routing of the thick electrically assisted turbocharger high voltage harness used at a high voltage, while suppressing the electrically assisted turbocharger high voltage harness from becoming long.

(2) In addition to the arrangement (1) above, the leaning vehicle of the embodiment of the present teaching may be arranged as described below.

In the vehicle frontal view of the leaning vehicle, the motor generator controller side end portion of the electrically assisted turbocharger high voltage harness is close to the center in the vehicle left-right direction of the leaning vehicle as compared to the electrically assisted turbocharger unit side end portion, and is above the electrically assisted turbocharger unit side end portion in the vehicle up-down direction.

According to this arrangement, the motor generator controller side end portion is at a high position that is close to the center in the vehicle left-right direction as compared to the electrically assisted turbocharger unit side end portion. With this, it is easy to provide the electrically assisted turbocharger unit in the space that is below the motor generator controller side end portion in the vehicle up-down direction and is at the vehicle left portion or the vehicle right portion remote from the center of the leaning vehicle in the vehicle left-right direction. The degree of positional freedom of the electrically assisted turbocharger unit relative to the motor generator unit in the vehicle left-right direction is increased, so that it is possible to provide the part from the motor generator controller side end portion to the electrically assisted turbocharger unit side end portion in the electrically assisted turbocharger high voltage harness. This makes the routing easier.

(3) In addition to the arrangement (1) or (2) above, the leaning vehicle of the embodiment of the present teaching may be arranged as described below.

The leaning vehicle further includes at least one front wheel, and the leaning vehicle in a stopped state, the motor generator controller side end portion of the electrically assisted turbocharger high voltage harness being above the upper end of the at least one front wheel in the vehicle up-down direction, and the upper end of the electric motor of the electrically assisted turbocharger being below the upper end of the at least one front wheel in the vehicle up-down direction.

With this arrangement, because the leaning vehicle has the at least one front wheel, the space above the upper end of the at least one front wheel in the vehicle up-down direction is spacious as compared to the space below the upper end of the at least one front wheel. The motor generator controller in the motor generator unit is larger in size than the electric motor of the electrically assisted turbocharger. The motor generator controller which is connected to the motor generator unit side end of the electrically assisted turbocharger high voltage harness and is larger in size than the electric motor of the electrically assisted turbocharger is provided in the space above the upper end of the at least one front wheel in the vehicle up-down direction, which is relatively spacious. On this account, the thick electrically assisted turbocharger high voltage harness can be routed more easily.

(4) In addition to any one of the arrangements (1) to (3) above, the leaning vehicle of the embodiment of the present teaching may be arranged as described below.

The electrically assisted turbocharger and the electrically assisted turbocharger controller of the electrically assisted turbocharger unit are separated from each other, and at least part of the electrically assisted turbocharger controller is provided rearward of the rearmost end in the vehicle front-rear direction of the electric motor of the electrically assisted turbocharger in the vehicle front-rear direction.

With this arrangement, at least part of the electrically assisted turbocharger controller is provided rearward of the rearmost end of the electric motor of the electrically assisted turbocharger in the vehicle front-rear direction. The electrically assisted turbocharger controller is provided by utilizing the space rearward in the vehicle front-rear direction of the electric motor of the electrically assisted turbocharger of the leaning vehicle in which the vehicle front-rear direction is longer than the vehicle left-right direction. It makes it easier to route the thick electrically assisted turbocharger high voltage harness.

(5) In addition to any one of the arrangements (1) to (4) above, the leaning vehicle of the embodiment of the present teaching may be arranged as described below.

The electrically assisted turbocharger and the electrically assisted turbocharger controller of the electrically assisted turbocharger unit are separated from each other, and at least part of the electrically assisted turbocharger controller is provided forward of the frontmost end of the motor generator controller in the vehicle front-rear direction.

With this arrangement, at least part of the electrically assisted turbocharger controller is provided forward of the frontmost end of the motor generator controller in the vehicle front-rear direction. The electrically assisted turbocharger controller is provided by utilizing the space forward in the vehicle front-rear direction of the motor generator controller of the leaning vehicle in which the vehicle left-right direction is longer than the vehicle front-rear direction. It makes easier to route the thick electrically assisted turbocharger high voltage harness.

(6) In addition to any one of the arrangements (1) to (4) above, the leaning vehicle of the embodiment of the present teaching may be arranged as described below.

The electrically assisted turbocharger and the electrically assisted turbocharger controller of the electrically assisted turbocharger unit are separated from each other, and at least part of the electrically assisted turbocharger controller is provided rearward of the rearmost end of the motor generator controller in the vehicle front-rear direction.

With this arrangement, at least part of the electrically assisted turbocharger controller is provided rearward of the rearmost end of the motor generator controller in the vehicle front-rear direction. The electrically assisted turbocharger controller is provided by utilizing the space rearward in the vehicle front-rear direction of the motor generator controller of the leaning vehicle in which the vehicle left-right direction is longer than the vehicle front-rear direction. It makes it easier to route the thick electrically assisted turbocharger high voltage harness.

In the present teaching and embodiments, a vehicle up-down direction is a direction perpendicular to a horizontal plane when a leaning vehicle stands erect on the horizontal plane. A vehicle left-right direction is the left-right direction for the rider of the leaning vehicle. A vehicle front-rear direction is a direction orthogonal to the vehicle up-down direction and the vehicle left-right direction, and is a front-rear direction for the rider on the leaning vehicle. A vehicle forward direction is a direction in which the leaning vehicle travels straight.

In the present teaching and embodiments, when a vehicle body frame leans in the vehicle rightward direction, the vehicle body frame leans in the vehicle rightward direction relative to the vehicle up-down direction. To put it differently, the vehicle body frame leans in such a way that an upper portion is rightward of a lower portion in the vehicle left-right direction. The definition of leaning of the vehicle body frame leftward in the vehicle left-right direction is similar to this.

In the present teaching and embodiments, the engine may be a single-cylinder engine having one combustion chamber or a multi-cylinder engine having plural combustion chambers. The engine may be a parallel multi-cylinder engine having combustion chambers aligned in the vehicle left-right direction. The engine may be a V engine having a front cylinder portion with at least one combustion chamber and a rear cylinder portion provided rearward of the cylinder portion.

In the present teaching and embodiments, the leaning vehicle may be, for example, a motorcycle or a motor tricycle having one or two front wheel(s). In the present teaching and embodiments, the leaning vehicle may or may not include an electric motor which is configured to generate driving force transmitted to a driving wheel without the intervention of the crankshaft of the engine. In the present teaching and embodiments, "the leaning vehicle is in a stopped state" means that the leaning vehicle is not running and is not leaning in the vehicle left-right direction.

In the present teaching and embodiments, at least one controller includes a motor generator controller and an electrically assisted turbocharger controller. The motor generator controller is configured to control a power generation state and a powering state of a motor generator having a power generation function and a powering function. For example, the motor generator may be controlled by the motor generator controller to be in the power generation state as a generator, or to be in the powering state as a starter motor. The electrically assisted turbocharger controller is configured to control the torque and rotation speed of the electric motor included in the electrically assisted turbocharger.

In the present teaching and embodiments, a motor generator unit includes the motor generator and the motor generator controller. In the present teaching and embodiments, the motor generator and the motor generator controller may be separated from each other or may be integrated. When the motor generator and the motor generator controller are integrated, the motor generator and the motor generator controller are, for example, provided on a side surface in the left-right direction or an upper surface of the engine. In the present teaching and embodiments, an electrically assisted turbocharger unit includes the electrically assisted turbocharger and the electrically assisted turbocharger controller. The electrically assisted turbocharger and the electrically assisted turbocharger controller are integrated or are separated from each other. When the electrically assisted turbocharger and the electrically assisted turbocharger controller are integrated, the electrically assisted turbocharger controller is provided at any position directly above or below the electrically assisted turbocharger in the vehicle up-down direction, to the left of or to the right of the electrically assisted turbocharger in the vehicle left-right direction, or in front of or behind the electrically assisted turbocharger in the vehicle front-rear direction. In the present teaching and embodiments, the motor generator may be provided on a crankshaft or may be provided on a shaft that is in parallel to the crankshaft but is different from the crankshaft. In the present teaching and embodiments, a capacitor may be connected between the motor generator unit and the electrically assisted turbocharger unit. In this case, at least part of electric energy generated by the motor generator may be stored in the capacitor. In the present teaching and embodiments, the electric motor in the electrically assisted turbocharger may have a power generation function. In this case, the motor generator may be driven by utilizing at least part of electric energy generated by the electric motor in the electrically assisted turbocharger. Furthermore, when a capacitor is connected between the motor generator unit and the electrically assisted turbocharger unit, at least part of electric energy generated by the electric motor in the electrically assisted turbocharger may be stored in the capacitor.

In the present teaching and embodiments, the electrically assisted turbocharger high voltage harness connects the motor generator unit and the electrically assisted turbocharger unit. To be more specific, the electrically assisted turbocharger high voltage harness includes: a part connecting the motor generator controller of the motor generator unit with the electrically assisted turbocharger controller of the electrically assisted turbocharger unit; and a part connecting the electrically assisted turbocharger with the electrically assisted turbocharger controller when the electrically assisted turbocharger and the electrically assisted turbocharger controller of the electrically assisted turbocharger unit are separated from each other. Furthermore, in the present teaching and embodiments, the electrically assisted turbocharger high voltage harness includes a part connecting the motor generator with the motor generator controller of the motor generator unit when the motor generator and the motor generator controller of the motor generator unit are separated from each other. In the present embodiment, the electrically assisted turbocharger high voltage harness may have an orange exterior.

In the present teaching and embodiments, an end portion on the electrically assisted turbocharger unit side of the electrically assisted turbocharger high voltage harness indicates an end portion of the electrically assisted turbocharger high voltage harness, which is connected to the electrically assisted turbocharger, when the electrically assisted turbocharger and the electrically assisted turbocharger controller of the electrically assisted turbocharger unit are separated from each other. In the present teaching and embodiments, an end portion on the electrically assisted turbocharger unit side of the electrically assisted turbocharger high voltage harness indicates an end portion of the electrically assisted turbocharger high voltage harness, which is connected to the electrically assisted turbocharger controller, when the electrically assisted turbocharger and the electrically assisted turbocharger controller of the electrically assisted turbocharger unit are integrated. In the present teaching and embodiments, an end portion on the motor generator controller side indicates an end portion of the electrically assisted turbocharger high voltage harness, which is connected to the motor generator controller.

In the present teaching and embodiments, the length from the upper end to the lower end in the vehicle up-down direction of a part from an electrically assisted turbocharger unit side end portion to a motor generator controller side end portion of the electrically assisted turbocharger high voltage harness in a vehicle frontal view or a vehicle side view indicates the length in the vehicle up-down direction between (i) a flat plane passing through the uppermost end in the vehicle up-down direction of the part from the electrically assisted turbocharger unit side end portion to the motor generator controller side end portion of the electrically assisted turbocharger high voltage harness and being orthogonal to the vehicle up-down direction, and (ii) a horizontal plane passing through the lowermost end in the vehicle up-down direction and being orthogonal to the vehicle up-down direction. The length from the left end to the right end in the vehicle left-right direction of the part from the electrically assisted turbocharger unit side end portion to the motor generator controller side end portion of the electrically assisted turbocharger high voltage harness in a vehicle frontal view indicates the length in the vehicle left-right direction between (i) a flat plane passing through the leftmost end in the vehicle left-right direction of the part from the electrically assisted turbocharger unit side end portion to the motor generator controller side end portion of the electrically assisted turbocharger high voltage harness and being orthogonal to the vehicle left-right direction and (ii) a flat plane passing through the rightmost end in the vehicle up-down direction and being orthogonal to the vehicle left-right direction. The length from the front end to the rear end in the vehicle front-rear direction of the part from the electrically assisted turbocharger unit side end portion to the motor generator controller side end portion of the electrically assisted turbocharger high voltage harness in a vehicle side view indicates the length in the vehicle front-rear direction between (i) a flat plane passing through the frontmost end in the vehicle front-rear direction of the part from the electrically assisted turbocharger unit side end portion to the motor generator controller side end portion of the electrically assisted turbocharger high voltage harness and being orthogonal to the vehicle front-rear direction and (ii) a flat plane passing through the rearmost end in the vehicle front-rear direction and being orthogonal to the vehicle front-rear direction.

In the present teaching and embodiments, when at least part of the electrically assisted turbocharger controller is forward of the front end of the motor generator controller in the vehicle front-rear direction, the at least part of the electrically assisted turbocharger controller is required to be forward of the front end of the motor generator controller in the vehicle front-rear direction, but the position of the at least part of the electrically assisted turbocharger controller is not specified in the vehicle up-down direction or the vehicle left-right direction. In the present teaching and embodiments, when at least part of the electrically assisted turbocharger controller is rearward of the rear end of the motor generator controller in the vehicle front-rear direction, the at least part of the electrically assisted turbocharger controller is required to be rearward of the rear end of the motor generator controller in the vehicle front-rear direction, but the position of the at least part of the electrically assisted turbocharger controller is not specified in the vehicle up-down direction or the vehicle left-right direction.

In the present teaching and embodiments, terms "including", "comprising", "having", and derivatives thereof are used to encompass not only listed items and equivalents thereof but also additional items.

In the present teaching and embodiments, the terms "mounted", "connected", "coupled", and "supported" are used in broad sense. Specifically, not only direct attachment, connection, coupling, and support but also indirect attachment, connection, coupling, and support are included. Further, connected and coupled are not limited to physical or mechanical connections and couplings. They also include direct or indirect electrical connections and couplings.

Unless otherwise defined, all terms (technical and scientific terms) used in this specification and claims indicate meanings typically understood by a person with ordinary skill in the art in the technical field to which the present teaching belongs. Terms such as those defined in commonly used dictionaries are to be interpreted as having meaning that is consistent with their meaning in the context of the relevant art and the present disclosure, and are not to be interpreted in an idealized or excessively formal sense.

In this description, the term "may" is non-exclusive. "May be" means "may be but not limited to". In the present description, "may" implicitly encompasses "do not".

Before the embodiments of the present teaching are detailed, it is informed that the present teaching is not limited to the configurations and layout of elements described below and/or shown in drawings. The present teaching is also applicable to embodiments other than the embodiments described later. The present teaching may be implemented as an embodiment other than the below-described embodiment. Furthermore, the present teaching may be implemented by suitably combining the below-described embodiments and modifications.

In a leaning vehicle of the present teaching, an electrically assisted turbocharger can be mounted by facilitating the routing of a thick electrically assisted turbocharger high voltage harness used at a high voltage while suppressing the electrically assisted turbocharger high voltage harness from becoming long.

### BRIEF DESCRIPTION OF THE DRAWINGS

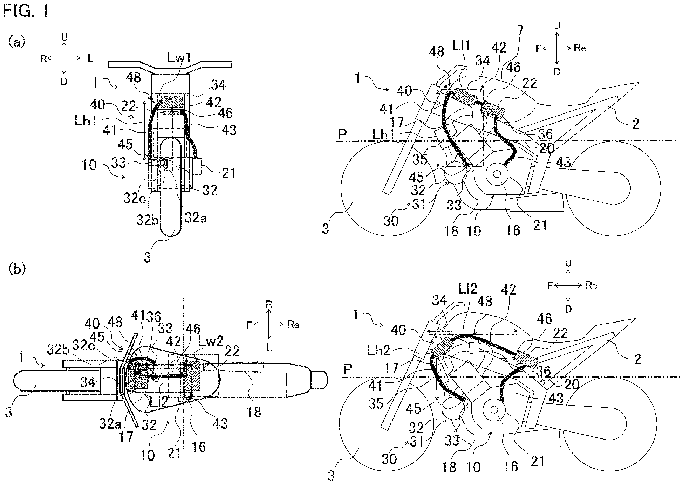

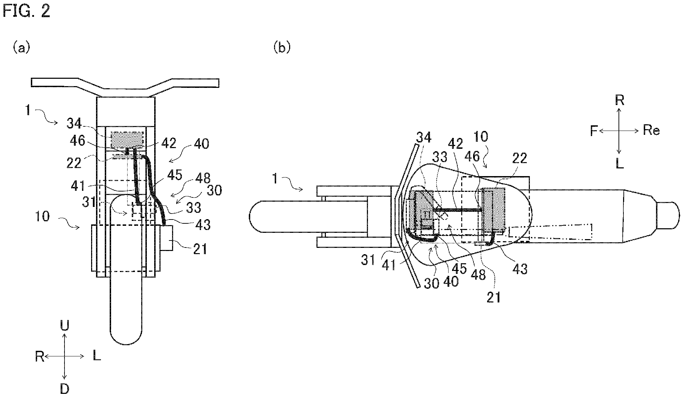

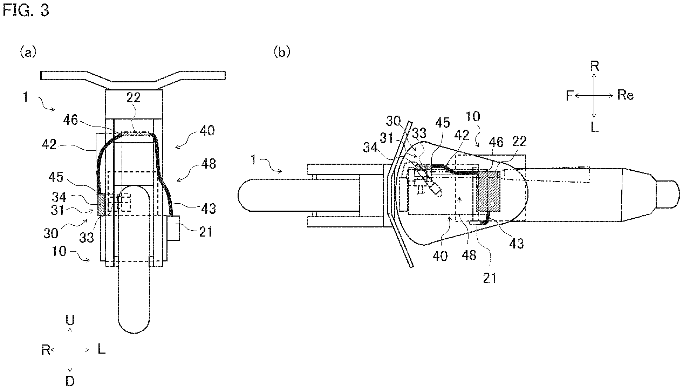

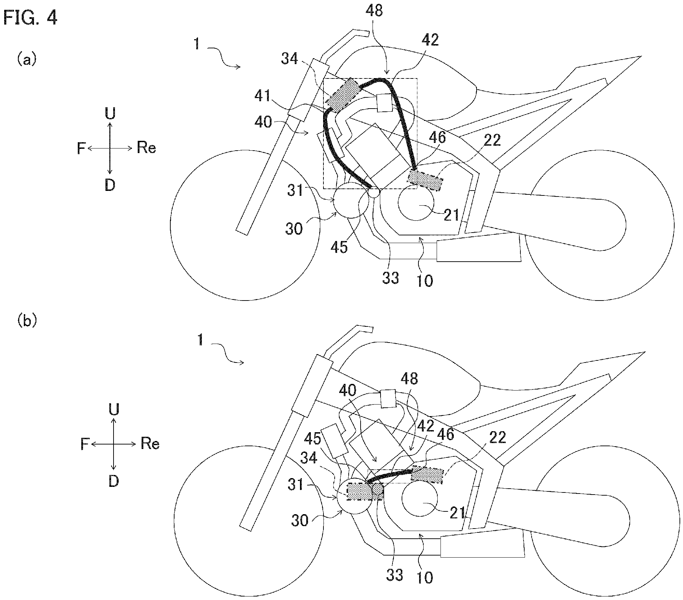

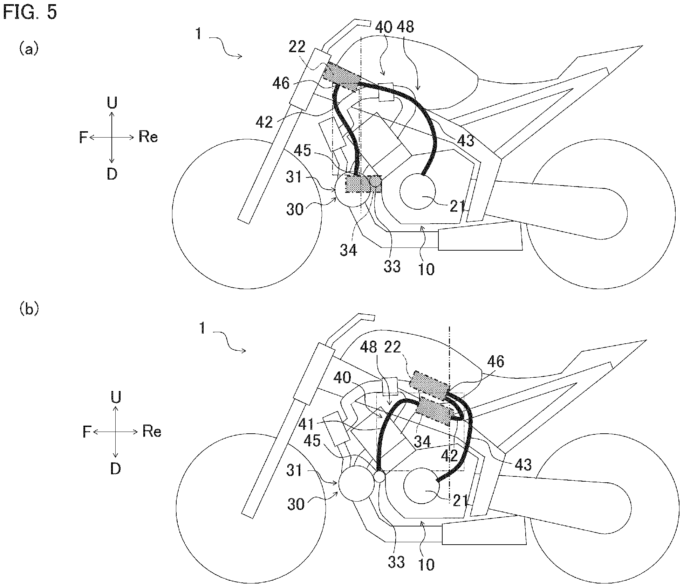

Each of FIGs. 1(a) and 1(b) is a schematic diagram showing an example of a leaning vehicle of an embodiment of the present teaching. FIG. 1(a) is a schematic diagram showing a leaning vehicle of the First Embodiment. FIG. 1(b) is a schematic diagram showing a leaning vehicle of the Second Embodiment.
Each of FIGs. 2(a) and 2(b) is a schematic diagram showing a modification of a leaning vehicle of an embodiment of the present teaching. FIG. 2(a) is a schematic diagram showing a modification of the leaning vehicle of the First Embodiment. FIG. 2(b) is a schematic diagram showing a modification of the leaning vehicle of the Second Embodiment.
Each of FIGs. 3(a) and 3(b) is a schematic diagram showing a modification of a leaning vehicle of an embodiment of the present teaching. FIG. 3(a) is a schematic diagram showing a modification of the leaning vehicle of the First Embodiment. FIG. 3(b) is a schematic diagram showing a modification of the leaning vehicle of the Second Embodiment.
Each of FIGs. 4(a) and 4(b) is a schematic diagram showing a modification of a leaning vehicle of an embodiment of the present teaching. FIG. 4(a) is a schematic diagram showing a modification of the leaning vehicle of the First Embodiment. FIG. 4(b) is a schematic diagram showing a modification of the leaning vehicle of the Second Embodiment.
Each of FIGs. 5(a) and 5(b) is a schematic diagram showing a modification of a leaning vehicle of an embodiment of the present teaching. FIG. 5(a) is a schematic diagram showing a modification of the leaning vehicle of the First Embodiment. FIG. 5(b) is a schematic diagram showing a modification of the leaning vehicle of the Second Embodiment.

### DESCRIPTION OF THE PREFERRED EMBODIMENTS

In FIG. 1 to FIG. 5, arrows F, Re, U, D, L, and R indicate a vehicle forward direction, a vehicle rearward direction, a vehicle upward direction, a vehicle downward direction, a vehicle leftward direction, and a vehicle rightward direction, respectively.

The following will describe a leaning vehicle 1 of an embodiment of the present teaching with reference to schematic diagrams of FIG. 1 to FIG. 5. As examples of the embodiment of the leaning vehicle, FIG. 1(a) and FIG. 1(b) show two embodiments, respectively. FIG. 1(a) and FIG. 1(b) show a leaning vehicle 1 of the First Embodiment and a leaning vehicle 1 of the Second Embodiment, which are in a stopped state. The left figure in FIG. 1(a) is a front view of the leaning vehicle 1 of the First Embodiment. The right figure in FIG. 1(a) is a side view of the leaning vehicle 1 of the First Embodiment. The left figure in FIG. 1(b) is a top view of the leaning vehicle 1 of the Second Embodiment. The right figure in FIG. 1(b) is a side view of the leaning vehicle 1 of the Second Embodiment.

The leaning vehicle 1 includes a vehicle body frame 2. The vehicle body frame 2 leans in the vehicle rightward direction when turning right and leans in the vehicle leftward direction when turning left. The leaning vehicle 1 includes an engine 10. The engine 10 includes a crankshaft 16. The engine 10 includes at least one unillustrated combustion chamber. The at least one combustion chamber is connected to an intake path 17 and an exhaust path 18. In the intake path 17, air supplied to the at least one combustion chamber flows. The intake path 17 is formed by members such as an intake pipe. In the exhaust path 18, exhaust gas exhausted from the at least one combustion chamber flows. The exhaust path 18 is formed by members such as an exhaust pipe. The leaning vehicle 1 includes various unillustrated pipes and wires in addition to pipes forming parts of the intake path 17 and the exhaust path 18.

The leaning vehicle 1 includes a motor generator unit 20. The motor generator unit 20 includes a motor generator 21 and a motor generator controller 22. The motor generator 21 is configured to be able to generate power by the rotational force of the crankshaft 16. In the example shown in FIG. 1, the motor generator 21 is provided on the crankshaft 16. The motor generator 21 may be provided on a shaft that is in parallel to the crankshaft 16 and is different from the crankshaft 16, so as to be able to transmit power. The motor generator controller 22 is configured to control the motor generator 21. The motor generator controller 22 is integrated with or separated from the motor generator 21. The motor generator controller 22 is one of at least one controller which is configured to control the motor generator 21 and an electric motor 33 rotating a rotational shaft 32b of a later-described electrically assisted turbocharger 31.

The leaning vehicle 1 includes an electrically assisted turbocharger unit 30. The electrically assisted turbocharger unit 30 includes an electrically assisted turbocharger 31 and an electrically assisted turbocharger controller 34. The electrically assisted turbocharger 31 includes a turbocharger 32 and an electric motor 33. The intake path 17 is formed partially inside the turbocharger 32. The exhaust path 18 is formed partially inside the turbocharger 32. The turbocharger 32 is configured to compress intake air supplied to the engine 10, by means of a compressor 32c that is provided on the same rotational shaft 32b as a turbine 32a driven by the exhaust gas exhausted from the engine 10. On the intake path 17, an intercooler 35 is provided to cool the air pressurized by the turbocharger 32. In the intake path 17, a throttle valve 36 is provided to adjust an amount of air supplied to the at least one combustion chamber. The electric motor 33 is configured to be able to rotate the rotational shaft 32b of the turbocharger 32 by utilizing electric energy generated by the motor generator 21. The electrically assisted turbocharger controller 34 is configured to control the electric motor 33 of the electrically assisted turbocharger 31. The electrically assisted turbocharger controller 34 is integrated with or separated from the electrically assisted turbocharger 31. The electrically assisted turbocharger controller 34 is one of at least one controller which is configured to control the motor generator 21 and the electric motor 33 rotating the rotational shaft 32b of the electrically assisted turbocharger 31.

The leaning vehicle 1 includes an electrically assisted turbocharger high voltage harness 40. The electrically assisted turbocharger high voltage harness 40 connects the motor generator unit 20 and the electrically assisted turbocharger unit 30 with each other. To be more specific, the electrically assisted turbocharger high voltage harness 40 connects the motor generator 21, the electric motor 33 of the electrically assisted turbocharger 31, and the motor generator controller 22 and the electrically assisted turbocharger controller 34, which are the at least one controller. The electrically assisted turbocharger high voltage harness 40 supplies electric energy from the motor generator 21 to the electric motor 33 of the electrically assisted turbocharger 31. The electrically assisted turbocharger high voltage harness 40 includes a part 42 which connects the motor generator controller 22 of the motor generator unit 20 and the electrically assisted turbocharger controller 34 of the electrically assisted turbocharger unit 30. Furthermore, the electrically assisted turbocharger high voltage harness 40 includes a part 41 which connects the electrically assisted turbocharger 31 and the electrically assisted turbocharger controller 34 when the electrically assisted turbocharger 31 and the electrically assisted turbocharger controller 34 of the electrically assisted turbocharger unit 30 are separated from each other. Furthermore, the electrically assisted turbocharger high voltage harness 40 includes a part 43 which connects the motor generator 21 and the motor generator controller 22 when the motor generator 21 and the motor generator controller 22 of the motor generator unit 20 are separated from each other. In the example shown in FIG. 1, the motor generator 21 and the motor generator controller 22 of the motor generator unit 20 are separated from each other. In the example shown in FIG. 1, the electrically assisted turbocharger 31 and the electrically assisted turbocharger controller 34 are separated from each other.

The electrically assisted turbocharger high voltage harness 40 includes an electrically assisted turbocharger unit side end portion 45 and a motor generator controller side end portion 46. The electrically assisted turbocharger unit side end portion 45 is an end portion of the electrically assisted turbocharger high voltage harness 40 and with which the electrically assisted turbocharger 31 is connected, when the electrically assisted turbocharger 31 and the electrically assisted turbocharger controller 34 of the electrically assisted turbocharger unit 30 are separated from each other. The electrically assisted turbocharger unit side end portion 45 is an end portion of the electrically assisted turbocharger high voltage harness 40 and with which the electrically assisted turbocharger controller 34 is connected, when the electrically assisted turbocharger 31 and the electrically assisted turbocharger controller 34 of the electrically assisted turbocharger unit 30 are integrated. The motor generator controller side end portion 46 is an end portion of the electrically assisted turbocharger high voltage harness 40 and with which the motor generator controller 22 is connected. A part 48 from the electrically assisted turbocharger unit side end portion 45 to the motor generator controller side end portion 46 of the electrically assisted turbocharger high voltage harness 40 includes the part 41 which connects the electrically assisted turbocharger 31 and the electrically assisted turbocharger controller 34 and the part 42 which connects the motor generator controller 22 and the electrically assisted turbocharger controller 34, when the electrically assisted turbocharger 31 and the electrically assisted turbocharger controller 34 of the electrically assisted turbocharger unit 30 are separated from each other. The part 48 from the electrically assisted turbocharger unit side end portion 45 to the motor generator controller side end portion 46 in the electrically assisted turbocharger high voltage harness 40 is routed as in the leaning vehicle 1 of the First Embodiment shown in FIG. 1(a) or the leaning vehicle 1 of the Second Embodiment shown in FIG. 1(b).

In the leaning vehicle 1 of the First Embodiment, the part 48 from the electrically assisted turbocharger unit side end portion 45 to the motor generator controller side end portion 46 in the electrically assisted turbocharger high voltage harness 40 is routed so that, as shown in the left figure in FIG. 1(a), the length Lh1 from the lower end to the upper end in the vehicle up-down direction is longer than the length Lw1 from the left end to the right end in the vehicle left-right direction, in a vehicle frontal view. Furthermore, the part 48 from the electrically assisted turbocharger unit side end portion 45 to the motor generator controller side end portion 46 in the electrically assisted turbocharger high voltage harness 40 is routed so that, as shown in the right figure in FIG. 1(a), the length Lh1 from the lower end to the upper end in the vehicle up-down direction is longer than the length from the front end to the rear end Ll1 in the vehicle front-rear direction, in a vehicle side view. The left figure in FIG. 1(a) shows a rectangle that passes through the upper end, the lower end, the left end, and the right end of the part 48 from the electrically assisted turbocharger unit side end portion 45 to the motor generator controller side end portion 46 in the vehicle up-down direction, is in parallel to the vehicle up-down direction, and is in parallel to the vehicle left-right direction. The right figure in FIG. 1(a) shows a rectangle that passes through the upper end, the lower end, the front end, and the rear end of the part 48 from the electrically assisted turbocharger unit side end portion 45 to the motor generator controller side end portion 46 in the vehicle up-down direction, is in parallel to the vehicle up-down direction, and is in parallel to the vehicle front-rear direction.

In the leaning vehicle 1 of the Second Embodiment, the part 48 from the electrically assisted turbocharger unit side end portion 45 to the motor generator controller side end portion 46 in the electrically assisted turbocharger high voltage harness 40 is routed so that, as shown in the left figure in FIG. 1(b), the length L12 from the front end to the rear end in the vehicle front-rear direction is longer than the length Lw2 from the left end to the right end in the vehicle left-right direction, in a vehicle top view. Furthermore, the part 48 from the electrically assisted turbocharger unit side end portion 45 to the motor generator controller side end portion 46 in the electrically assisted turbocharger high voltage harness 40 is routed so that, as shown in the right figure in FIG. 1(b), the length Ll2 from the front end to the rear end in the vehicle front-rear direction is longer than the length Lh2 from the upper end to the lower end in the vehicle up-down direction, in a vehicle side view. The left figure in FIG. 1(b) shows a rectangle that passes through the front end, the rear end, the left end, and the right end of the part 48 from the electrically assisted turbocharger unit side end portion 45 to the motor generator controller side end portion 46 in the vehicle up-down direction, is in parallel to the vehicle front-rear direction, and is in parallel to the vehicle left-right direction. The right figure in FIG. 1(b) shows a rectangle that passes through the upper end, the lower end, the front end, and the rear end of the part 48 from the electrically assisted turbocharger unit side end portion 45 to the motor generator controller side end portion 46 in the vehicle up-down direction, is in parallel to the vehicle up-down direction, and is in parallel to the vehicle front-rear direction.

In the leaning vehicle 1 of the First Embodiment, as shown in the left figure in FIG. 1(a), the motor generator controller side end portion 46 of the electrically assisted turbocharger high voltage harness 40 is close to the center in the vehicle left-right direction of the leaning vehicle 1 as compared to the electrically assisted turbocharger unit side end portion 45 and is above the electrically assisted turbocharger unit side end portion 45 in the vehicle up-down direction, in a vehicle frontal view of the leaning vehicle 1 in the stopped state. Likewise, in the leaning vehicle 1 of the Second Embodiment, the motor generator controller side end portion 46 of the electrically assisted turbocharger high voltage harness 40 may be close to the center in the vehicle left-right direction of the leaning vehicle 1 as compared to the electrically assisted turbocharger unit side end portion 45 and may be above the electrically assisted turbocharger unit side end portion 45 in the vehicle up-down direction, in the vehicle frontal view of the leaning vehicle 1 in the stopped state. In this case, it is easy to provide the electrically assisted turbocharger unit 30 in a space that is below the motor generator controller side end portion 46 in the vehicle up-down direction and is at the vehicle left portion or the vehicle right portion remote from the center of the leaning vehicle 1 in the vehicle left-right direction. As a result, the degree of positional freedom of the electrically assisted turbocharger unit in the vehicle left-right direction relative to the motor generator unit 20 is increased, so that it is possible to provide the part 48 from the motor generator controller side end portion 46 to the electrically assisted turbocharger unit side end portion 45 in the electrically assisted turbocharger high voltage harness 40. This makes the routing easier.

The leaning vehicle 1 includes at least one front wheel 3. While the number of the at least one front wheel 3 is one in the examples of the leaning vehicles 1 of the First Embodiment and the Second Embodiment shown in FIG. 1, the leaning vehicle 1 may include plural front wheels. As the right figure in FIG. 1(a) showing the leaning vehicle 1 of the First Embodiment and the right figure in FIG. 1(b) showing the leaning vehicle 1 of the Second Embodiment indicate, the motor generator controller side end portion 46 of the electrically assisted turbocharger high voltage harness 40 is provided above the upper end of the at least one front wheel 3 in the vehicle up-down direction, in a vehicle frontal view of the leaning vehicle 1 in the stopped state. Furthermore, the electric motor 33 of the electrically assisted turbocharger 31 is arranged so that its upper end is positioned below the upper end of the at least one front wheel 3 in the vehicle up-down direction. The right figure in FIG. 1(a) and the right figure in FIG. 1(b) show a flat plane P that passes through the upper end of the at least one front wheel 3 and is orthogonal to the vehicle up-down direction.

In the leaning vehicle 1 of the First Embodiment, as indicated by the example in FIG. 1(a), at least part of the electrically assisted turbocharger controller 34 is provided rearward of the rearmost end in the vehicle front-rear direction of the electric motor 33 of the electrically assisted turbocharger 31 in the vehicle front-rear direction, when the electrically assisted turbocharger 31 and the electrically assisted turbocharger controller 34 of the electrically assisted turbocharger unit 30 are separated from each other. In the right figure in FIG. 1(a), a flat plane that passes through the rearmost end in the vehicle front-rear direction of the electric motor 33 and is orthogonal to the vehicle front-rear direction is indicated by a two-dot chain line. In this case, the motor generator controller 22 and the electrically assisted turbocharger controller 34 can be accommodated in a fuel tank cover 7 of the leaning vehicle 1. Because the fuel tank cover 7 is relatively spacious, the motor generator controller 22 and the electrically assisted turbocharger controller 34 can be easily provided therein. Although not illustrated, in the leaning vehicle 1 of the First Embodiment, the electrically assisted turbocharger controller 34 may be provided forward of the rearmost end in the vehicle front-rear direction of the electric motor 33 of the electrically assisted turbocharger 31 in the vehicle front-rear direction, when the electrically assisted turbocharger 31 and the electrically assisted turbocharger controller 34 of the electrically assisted turbocharger unit 30 are separated from each other.

As indicated by the examples of the leaning vehicle 1 of the First Embodiment in FIG. 1(a) and the leaning vehicle 1 of the Second Embodiment in FIG. 1(b), at least part of the electrically assisted turbocharger controller 34 is provided forward of the frontmost end in the vehicle front-rear direction of the motor generator controller 22, when the electrically assisted turbocharger 31 and the electrically assisted turbocharger controller 34 of the electrically assisted turbocharger unit 30 are separated from each other. In the right figure in FIG. 1(a) and the right figure in FIG. 1(b), a flat plane that passes through the frontmost end in the vehicle front-rear direction of the motor generator controller 22 and is orthogonal to the vehicle front-rear direction is indicated by a two-dot chain line.

In the example of the leaning vehicle 1 of the Second Embodiment in FIG. 1(b), the electrically assisted turbocharger 31 and the electrically assisted turbocharger controller 34 of the electrically assisted turbocharger unit 30 are separated from each other, and the electrically assisted turbocharger controller 34 is provided forward of the rearmost end in the vehicle front-rear direction of the electric motor 33 of the electrically assisted turbocharger 31 in the vehicle front-rear direction. In this case, the motor generator controller 22 is provided on the vehicle body frame 2. The electrically assisted turbocharger controller 34 is attached to the vehicle body frame 2 and accommodated in a cowl (not illustrated) if the leaning vehicle 1 is provided with the cowl. Although not illustrated, in the leaning vehicle 1 of the Second Embodiment, at least part of the electrically assisted turbocharger controller 34 may be provided rearward of the rearmost end in the vehicle front-rear direction of the electric motor 33 of the electrically assisted turbocharger 31 in the vehicle front-rear direction, when the electrically assisted turbocharger 31 and the electrically assisted turbocharger controller 34 of the electrically assisted turbocharger unit 30 are separated from each other.

In the example shown in FIG. 1, the motor generator controller 22 and the electrically assisted turbocharger controller 34 are provided at the center in the vehicle left-right direction of the leaning vehicle 1. The motor generator 21 is provided in the vehicle left portion, whereas the electric motor 33 of the electrically assisted turbocharger 31 is provided in the vehicle right portion. Alternatively, as shown in FIG. 2(a) indicating a modification of the leaning vehicle 1 of the First Embodiment shown in FIG. 1(a), the motor generator 21 may be provided in the vehicle left portion and the electric motor 33 of the electrically assisted turbocharger 31 may also be provided in the vehicle left portion. Alternatively, as shown in FIG. 2(b) indicating a modification of the leaning vehicle 1 of the Second Embodiment shown in FIG. 1(b), the motor generator 21 may be provided in the vehicle left portion and the electric motor 33 of the electrically assisted turbocharger 31 may also be provided in the vehicle left portion.

In the example shown in FIG. 1, the electrically assisted turbocharger 31 and the electrically assisted turbocharger controller 34 of the electrically assisted turbocharger unit 30 are separated from each other. Alternatively, as indicated in the example shown in FIG. 3, the electrically assisted turbocharger 31 and the electrically assisted turbocharger controller 34 of the electrically assisted turbocharger unit 30 may be integrated. In the example shown in FIG. 3, the electrically assisted turbocharger controller 34 is provided on a side face of the electrically assisted turbocharger 31. FIG. 3(a) is a front view showing a modification of the leaning vehicle 1 of the First Embodiment shown in FIG. 1(a). FIG. 3(b) is a top view showing a modification of the leaning vehicle 1 of the Second Embodiment shown in FIG. 1(b). The part 48 from the electrically assisted turbocharger unit side end portion 45 to the motor generator controller side end portion 46 in the electrically assisted turbocharger high voltage harness 40 includes only the part 42 which connects the motor generator controller 22 and the electrically assisted turbocharger controller 34, when the electrically assisted turbocharger 31 and the electrically assisted turbocharger controller 34 of the electrically assisted turbocharger unit 30 are integrated. FIG. 3(a) indicating a modification of the leaning vehicle 1 of the First Embodiment shows a rectangle that passes through the upper end, the lower end, the left end, and the right end of the part 48 from the electrically assisted turbocharger unit side end portion 45 to the motor generator controller side end portion 46 in the vehicle up-down direction, is in parallel to the vehicle up-down direction, and is in parallel to the vehicle left-right direction. FIG. 3(b) indicating a modification of the leaning vehicle 1 of the Second Embodiment shows a rectangle that passes through the left end, the right end, the front end, and the rear end of the part 48 from the electrically assisted turbocharger unit side end portion 45 to the motor generator controller side end portion 46 in the vehicle up-down direction, is in parallel to the vehicle left-right direction, and is in parallel to the vehicle front-rear direction.

In the example shown in FIG. 1, the motor generator 21 and the motor generator controller 22 of the motor generator unit 20 are separated from each other. In this regard, as indicated in the example shown in FIG. 4, the motor generator 21 and the motor generator controller 22 of the motor generator unit 20 may be integrated. In the example shown in FIG. 4, the motor generator 21 is provided on the crankshaft 16 of the engine 10 and the motor generator controller 22 is integrally provided on the upper surface of the rear portion of the motor generator 21. FIG. 4(a) is a side view showing a modification of the leaning vehicle 1 of the First Embodiment shown in FIG. 1(a). FIG. 4(b) is a top view showing a modification of the leaning vehicle 1 of the Second Embodiment shown in FIG. 1(b). As shown in FIG. 4(a) and FIG. 4(b), the motor generator controller 22 and the motor generator 21 are integrated. The modification of the leaning vehicle 1 of the First Embodiment shown in FIG. 4(a) is an example in which the electrically assisted turbocharger 31 and the electrically assisted turbocharger controller 34 of the electrically assisted turbocharger unit 30 are separated. In the modification of the leaning vehicle 1 of the First Embodiment shown in FIG. 4(a), the part 48 from the electrically assisted turbocharger unit side end portion 45 to the motor generator controller side end portion 46 in the electrically assisted turbocharger high voltage harness 40 includes the part 41 which connects the electrically assisted turbocharger 31 and the electrically assisted turbocharger controller 34 and the part 42 which connects the motor generator controller 22 and the electrically assisted turbocharger controller 34. The modification of the leaning vehicle 1 of the Second Embodiment shown in FIG. 4(b) is an example in which the electrically assisted turbocharger 31 and the electrically assisted turbocharger controller 34 of the electrically assisted turbocharger unit 30 are integrated. In the modification of the leaning vehicle 1 of the Second Embodiment shown in FIG. 4(b), the part 48 from the electrically assisted turbocharger unit side end portion 45 to the motor generator controller side end portion 46 in the electrically assisted turbocharger high voltage harness 40 includes the part 42 which connects the motor generator controller 22 and the electrically assisted turbocharger controller 34. FIG. 4 shows a rectangle that passes through the upper end, the lower end, the front end, and the rear end of the part 48 from the electrically assisted turbocharger unit side end portion 45 to the motor generator controller side end portion 46 in the vehicle up-down direction, is in parallel to the vehicle up-down direction, and is in parallel to the vehicle front-rear direction. Although not illustrated, in the modification of the leaning vehicle 1 of the First Embodiment shown in FIG. 4(a) in which the motor generator controller 22 and the motor generator 21 are integrated, the electrically assisted turbocharger 31 and the electrically assisted turbocharger controller 34 of the electrically assisted turbocharger unit 30 may be integrated. Although not illustrated, in the modification of the leaning vehicle 1 of the Second Embodiment shown in FIG. 4(b) in which the motor generator controller 22 and the motor generator 21 are integrated, the electrically assisted turbocharger 31 and the electrically assisted turbocharger controller 34 of the electrically assisted turbocharger unit 30 may be separated from each other.

In the example shown in FIG. 1, at least part of the electrically assisted turbocharger controller 34 is provided forward of the frontmost end in the vehicle front-rear direction of the motor generator controller 22, when the electrically assisted turbocharger 31 and the electrically assisted turbocharger controller 34 of the electrically assisted turbocharger unit 30 are separated from each other. Alternatively, as shown in the example in FIG. 5, at least part of the electrically assisted turbocharger controller 34 may be provided rearward of the rearmost end in the vehicle front-rear direction of the motor generator controller 22, when the electrically assisted turbocharger 31 and the electrically assisted turbocharger controller 34 of the electrically assisted turbocharger unit 30 are separated from each other. FIG. 5(a) is a side view showing a modification of the leaning vehicle 1 of the First Embodiment of FIG. 1(a), whereas FIG. 5(b) is a side view showing a modification of the leaning vehicle 1 of the Second Embodiment of FIG. 1(b). FIG. 5(a) and FIG. 5(b) show the leaning vehicle 1 in the stopped state.

The modification of the leaning vehicle 1 of the First Embodiment shown in FIG. 5(a) is an example in which the electrically assisted turbocharger 31 and the electrically assisted turbocharger controller 34 of the electrically assisted turbocharger unit 30 are integrated. The modification of the leaning vehicle 1 of the Second Embodiment shown in FIG. 5(b) is an example in which the electrically assisted turbocharger 31 and the electrically assisted turbocharger controller 34 of the electrically assisted turbocharger unit 30 are separated from each other. As shown in the examples in FIG. 5(a) and FIG. 5(b), at least part of the electrically assisted turbocharger controller 34 is provided rearward of the rearmost end in the vehicle front-rear direction of the motor generator controller 22. In FIG. 5(a) and FIG. 5(b), a flat plane that passes through the rearmost end in the vehicle front-rear direction of the motor generator controller 22 and is orthogonal to the vehicle front-rear direction is indicated by a two-dot chain line. FIG. 5 shows a rectangle that passes through the upper end, the lower end, the front end, and the rear end of the part 48 from the electrically assisted turbocharger unit side end portion 45 to the motor generator controller side end portion 46 in the vehicle up-down direction, is in parallel to the vehicle up-down direction, and is in parallel to the vehicle front-rear direction. Although not illustrated, in the modification of the leaning vehicle 1 of the First Embodiment shown in FIG. 5(a) in which at least part of the electrically assisted turbocharger controller 34 is rearward in the vehicle front-rear direction of the rearmost end of the motor generator controller 22, the electrically assisted turbocharger 31 and the electrically assisted turbocharger controller 34 of the electrically assisted turbocharger unit 30 may be separated from each other. Although not illustrated, in the modification of the leaning vehicle 1 of the Second Embodiment shown in FIG. 5(b) in which at least part of the electrically assisted turbocharger controller 34 is rearward in the vehicle front-rear direction of the rearmost end of the motor generator controller 22, the electrically assisted turbocharger 31 and the electrically assisted turbocharger controller 34 of the electrically assisted turbocharger unit 30 may be integrated.

In the leaning vehicle 1 of each of the First Embodiment, the Second Embodiment, and the modifications, the rotational shaft of the electric motor 33 of the electrically assisted turbocharger 31 is provided on a shaft that is in parallel to the rotational shaft 32b of the turbocharger 32, but is different from the rotational shaft 32b of the turbocharger 32. Furthermore, in the leaning vehicle 1 of each of the First Embodiment, the Second Embodiment, and the modifications, the rotational shaft of the electric motor 33 of the electrically assisted turbocharger 31 may be provided on the rotational shaft 32b of the turbocharger 32.

In the leaning vehicle 1 of each of the First Embodiment and the Second Embodiment, the motor generator controller 22 of the motor generator unit 20 and the electrically assisted turbocharger controller 34 of the electrically assisted turbocharger unit 30 are separated from each other. In this regard, in the leaning vehicle 1 of each of the First Embodiment and the Second Embodiment, the motor generator controller 22 of the motor generator unit 20 and the electrically assisted turbocharger controller 34 of the electrically assisted turbocharger unit 30 may be separated from each other.

In the leaning vehicle 1 of each of the First Embodiment, the Second Embodiment, and the modifications, when the motor generator controller 22 and the motor generator 21 are separated from each other, the motor generator controller 22 is provided above the motor generator 21 in the vehicle up-down direction. When the motor generator controller 22 and the motor generator 21 are separated from each other, the motor generator controller 22 may be provided below the motor generator 21 in the vehicle up-down direction. When the motor generator controller 22 and the motor generator 21 are separated from each other, the motor generator controller 22 is provided above the electric motor 33 in the vehicle up-down direction. When the motor generator controller 22 and the motor generator 21 are separated from each other, the motor generator controller 22 may be provided below the electric motor 33 in the vehicle up-down direction. When the electrically assisted turbocharger controller 34 and the electric motor 33 are separated from each other, the electrically assisted turbocharger controller 34 may be provided above the electric motor 33 in the vehicle up-down direction. When the electrically assisted turbocharger controller 34 and the electric motor 33 are separated from each other, the electrically assisted turbocharger controller 34 may be provided below the electric motor 33 in the vehicle up-down direction. When the electrically assisted turbocharger controller 34 and the electric motor 33 are separated from each other, the electrically assisted turbocharger controller 34 may be provided above the motor generator 21 in the vehicle up-down direction. When the electrically assisted turbocharger controller 34 and the electric motor 33 are separated from each other, the electrically assisted turbocharger controller 34 may be provided below the motor generator 21 in the vehicle up-down direction.

## Claims

1. A leaning vehicle comprising:
a vehicle body frame which leans in a vehicle rightward direction when turning right and leans in a vehicle leftward direction when turning left;
an engine which includes a crankshaft;
a motor generator which is configured to generate electric power by rotational force of the crankshaft;
an electrically assisted turbocharger which includes a turbocharger and an electric motor, the turbocharger being configured to compress intake air supplied to the engine, by a compressor provided on the same rotational shaft as a turbine driven by exhaust gas exhausted from the engine, and the electric motor being configured to rotate the rotational shaft of the turbocharger by utilizing electric energy generated by the motor generator;
at least one controller which is configured to control the motor generator and the electric motor rotating the rotational shaft of the electrically assisted turbocharger; and
an electrically assisted turbocharger high voltage harness which connects the motor generator, the electric motor of the electrically assisted turbocharger, and the at least one controller so as to supply the electric energy from the motor generator to the electric motor of the electrically assisted turbocharger,
the leaning vehicle further comprising: a motor generator unit which includes the motor generator and a motor generator controller configured to control the motor generator; and
an electrically assisted turbocharger unit which includes the electrically assisted turbocharger and an electrically assisted turbocharger controller which is configured to control the electric motor of the electrically assisted turbocharger and is integrated with or separated from the electrically assisted turbocharger,
the electrically assisted turbocharger high voltage harness which connects the motor generator unit and the electrically assisted turbocharger unit includes a part connecting the motor generator controller of the motor generator unit and the electrically assisted turbocharger controller of the electrically assisted turbocharger unit and a part connecting the electrically assisted turbocharger and the electrically assisted turbocharger controller of the electrically assisted turbocharger unit when the electrically assisted turbocharger and the electrically assisted turbocharger controller are separated from each other, and a part from an electrically assisted turbocharger unit side end portion to a motor generator controller side end portion in the electrically assisted turbocharger high voltage harness being either:
(i) routed so that the length from the lower end to the upper end in a vehicle up-down direction is longer than the length from the left end to the right end in a vehicle left-right direction in a vehicle frontal view, and the length from the lower end to the upper end in the vehicle up-down direction is longer than the length from the front end to the rear end in a vehicle front-rear direction in a vehicle side view, or
(ii) routed so that the length from the front end to the rear end in the vehicle front-rear direction is longer than the length from the left end to the right end in the vehicle left-right direction in a vehicle top view, and the length from the front end to the rear end in the vehicle front-rear direction is longer than the length from the upper end to the lower end in the vehicle up-down direction in a vehicle side view.

2. The leaning vehicle according to claim 1, wherein the motor generator controller side end portion of the electrically assisted turbocharger high voltage harness is close to the center in the vehicle left-right direction of the leaning vehicle as compared to the electrically assisted turbocharger unit side end portion, and is above the electrically assisted turbocharger unit side end portion in the vehicle up-down direction.

3. The leaning vehicle according to claim 1 or 2, further comprising at least one front wheel,
in a vehicle frontal view of the leaning vehicle in a stopped state,
the motor generator controller side end portion of the electrically assisted turbocharger high voltage harness being above the upper end of the at least one front wheel in the vehicle up-down direction, and
the upper end of the electric motor of the electrically assisted turbocharger being below the upper end of the at least one front wheel in the vehicle up-down direction.

4. The leaning vehicle according to any one of claims 1 to 3, wherein,
the electrically assisted turbocharger and the electrically assisted turbocharger controller of the electrically assisted turbocharger unit are separated from each other, and
at least part of the electrically assisted turbocharger controller is provided rearward of the rearmost end in the vehicle front-rear direction of the electric motor of the electrically assisted turbocharger in the vehicle front-rear direction.

5. The leaning vehicle according to any one of claims 1 to 4, wherein,
the electrically assisted turbocharger and the electrically assisted turbocharger controller of the electrically assisted turbocharger unit are separated from each other, and
at least part of the electrically assisted turbocharger controller is provided forward of the frontmost end of the motor generator controller in the vehicle front-rear direction.

6. The leaning vehicle according to any one of claims 1 to 4, wherein,
the electrically assisted turbocharger and the electrically assisted turbocharger controller of the electrically assisted turbocharger unit are separated from each other, and
at least part of the electrically assisted turbocharger controller is provided rearward of the rearmost end of the motor generator controller in the vehicle front-rear direction.
